# EUROPEAN PATENT APPLICATION

(11) **EP 4 234 974 A1**
(43) Date of publication of application: **30.08.2023**
(21) Application number: 22159047.4
(22) Date of filing: 27.02.2022
(51) Int. Cl.: F16G 11/04

(54) **A WEDGE CLAMP AND A METHOD FOR MANUFACTURING THE WEDGE CLAMP**

(71) Applicant: Eurolaite Oy, 02630 Espoo (FI)
(72) Inventor: TIIHONEN, Kalevi, 71800 Siilinjärvi (FI)
(74) Representative: Koivisto, Harri Kristian

(57) **Abstract**

A wedge clamp and a method for manufacturing the wedge clamp are disclosed hereinafter. The wedge clamp body (10) has two grooves (11, 12), each configured to receive one wire rope (31, 32) from a first direction (1). The wedge clamp body (10) has two tensioning openings (42) configured to receive a tensioning device (40) from a second direction. In one embodiment, the tensioning device (40) is an U-bolt that is tightened against the wedge clamp body (10) from the first direction (1). The wedge clamp has a symmetrical shape that distributes the loads and stress evenly across the clamp body.

Each groove (11, 12) is open to the side. The inside shape of single groove (11, 12) has two forms, one is a drilled hole configured to accept the wire rope diameter. The second shape is a tapered wall adjacent to the drilled hole, configured to receive a wedge that clamps the wire rope against the drilled groove wall. One side of the clamp is concave, towards the wire rope (31, 32). The opposite side of the clamp is tapered, so it will move closer to the wire rope (31, 32) when pushed inside the groove (11, 12) and clamp the wire rope (31, 32) against the groove wall.

## Description

### BACKGROUND

The present disclosure relates to means for fastening cables or ropes with wedging action. In one exemplary embodiment, the ropes are guy wires or stay wires for supporting poles or masts. A wedge clamp may be used for anchoring and tensioning the wire rope of an overhead electric line structures to ground, to anchor rod or other foundation.

Wedge clamps or tensioners are often made of cast steel. Cast steel products may be susceptible to variations in the product quality. The production parameters may vary even during long runs. One alternative is to machine the wedge clamp from a plate steel, but the number of required operations often renders such products to be too expensive.

### SUMMARY

This summary is provided to introduce a selection of concepts in a simplified form that will be further described below in the detailed description. This summary is intended to neither identify key features or essential features of the claimed subject matter nor to be used to limit the scope of the claimed subject matter. Furthermore, the claimed subject matter is not limited to implementations that solve any or all of the disadvantages noted in any part of this disclosure.

A wedge clamp and a method for manufacturing the wedge clamp are disclosed hereinafter. The wedge clamp body has two grooves, each configured to receive one wire rope from a first direction. The wedge clamp body has two tensioning openings configured to receive a tensioning device from a second direction. In one embodiment, the tensioning device is an U-bolt that is tightened against the wedge clamp body from the first direction. The wedge clamp has a symmetrical shape that distributes the loads and stress evenly across the clamp body.

Each groove is open to one side. The inside shape of the single groove has two forms, one is a drilled hole configured to accept the wire rope diameter. The second shape is a tapered wall adjacent to the drilled hole, configured to receive a wedge that clamps the wire rope against the drilled groove wall. One side of the clamp is concave, towards the wire rope to be clamped. The opposite side of the clamp is tapered, so it will move closer to the wire rope when pushed inside the groove and clamp the wire rope against the groove wall.

The wire ropes may be positioned parallel in adjacent grooves. The free end of the wire rope is in one example clamped by a clamp that binds together with the free end of the wedge that extends out of the clamp body, out from the groove. The wedge has an elongated shape that is suitable for clamping the free end of the wire in connection to the exposed portion of the wedge.

The wedge clamp may be manufactured from steel plate by simple machining steps. Each groove may be manufactured by drilling a single hole and cutting the tapered portion of the groove by two or three cuts in different directions. Machining the wedge clamp enables even quality with mitigated risk for weaknesses and hidden defects. The simple design keeps the machining costs down as each machining step may increase the overall manufacturing costs.

Many of the attendant features will be more readily appreciated as they become better understood by reference to the following detailed description considered in connection with the accompanying drawings. The embodiments described below are not limited to implementations which solve any or all the disadvantages of known wedge clamps or stay wire tensioners.

### BRIEF DESCRIPTION OF THE DRAWINGS

The present description will be better understood from the following detailed description read in light of the accompanying drawings, wherein
FIG. 1 illustrates schematically an isometric view of one exemplary embodiment of a wedge clamp;
FIG. 2a illustrates schematically an isometric view of one exemplary embodiment of a clamp body;
FIG. 2b illustrates schematically a side view of the clamp body;
FIG. 2c illustrates schematically a top view of the clamp body;
FIG. 3 illustrates schematically an isometric view of one exemplary embodiment of a stock, unmachined clamp body;
FIG. 4a illustrates schematically an isometric view of one exemplary embodiment of a wedge;
FIG. 4b illustrates schematically a first side view of the wedge;
FIG. 4c illustrates schematically a second side view of the wedge;
FIG. 5a illustrates schematically a first side view of the wedge clamp; and
FIG. 5b illustrates schematically a second side view of the wedge clamp.

Like reference numerals are used to designate like parts in the accompanying drawings.

### DETAILED DESCRIPTION

The detailed description provided below in connection with the appended drawings is intended as a description of the present examples and is not intended to represent the only forms in which the present example may be constructed or utilized. However, the same or any equivalent functions and sequences may be accomplished by different examples.

Although the present examples are described and illustrated herein as being implemented in supporting electric poles for overhead lines, they are provided as an example and not a limitation. As those skilled in the art will appreciate, the present examples are suitable for application in a variety of different types of wire rope clamps to anchor and/or support stay wires or guy wires of various structures.

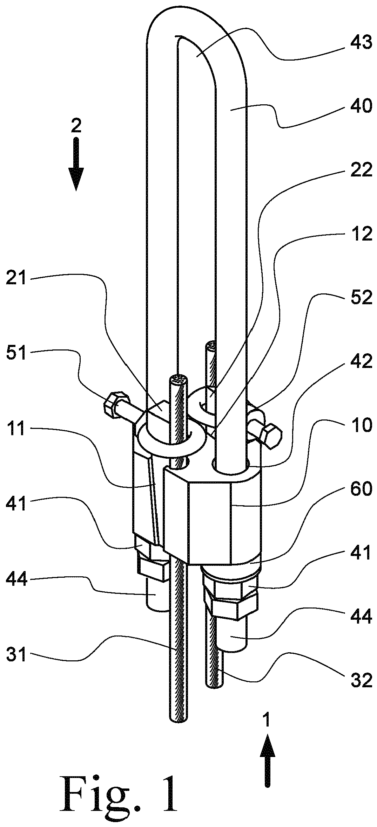

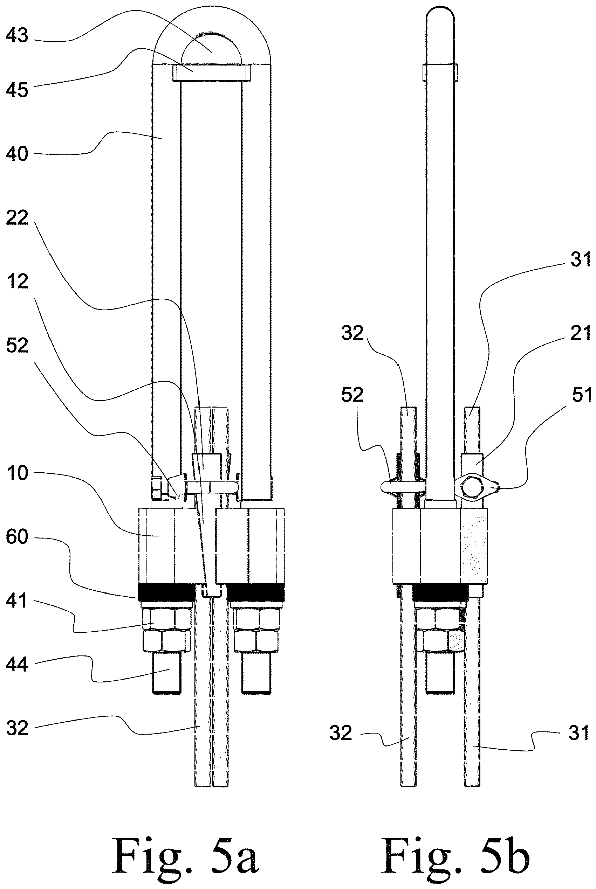

FIG. 1 illustrates schematically one exemplary embodiment of a wedge clamp. The wedge clamp may be used to attach and to tension two stay wires of the overhead electric line poles, masts or other structures. The wedge clamp comprises a clamp body 10. FIG. 5a is a first side view of the same wedge clamp and FIG. 5b is a second side view of the same wedge clamp.

The clamp body 10 comprises two grooves on opposite sides of the clamp body 10. In one embodiment the clamp body 10 and the complete wedge clamp structure has a symmetrical shape in order to distribute loads evenly and to simplify the manufacturing process. A first groove 11 is configured to receive a first wire rope 31 from a first direction 1. A second groove 12 is configured to receive a second wire rope 32 from a first direction 1. In one embodiment the first wire rope 31 and the second wire rope 32 are configured to travel through the wedge clamp in parallel.

A tensioning device 40 is configured to tension the first wire rope 31 and the second wire rope 32. The tensioning device 40 comprises a loop 43 facing a second direction 2. The loop 43 is connectable to a ground anchor or other fastening means. The clamp body 10 comprises two tensioning openings 42 configured to receive the tensioning device 40 from the second direction 2. The first direction 1 is directed towards the ropes to be tightened and the second direction 2 is opposite to the first direction 1, towards the ground anchor or other fastening point. The direction of the first wire rope 31 and the second wire rope 32, when in a tensioned state, may be angled against the parallel line of direction 2.

The tensioning device further comprises two threaded bars 44 facing the first direction 1, configured to extend through the two tensioning openings 42. Two nuts 41 are configured to tighten the threaded bars 44 against or towards the clamp body 10 and to tension the wedge clamp. In one embodiment, the tensioning device 40 is a U-bolt and the nuts 41 tighten the U-bolt against the clamp body. In one embodiment, a curved portion of the U-bolt comprises a stud 45 for defining the loop 43.

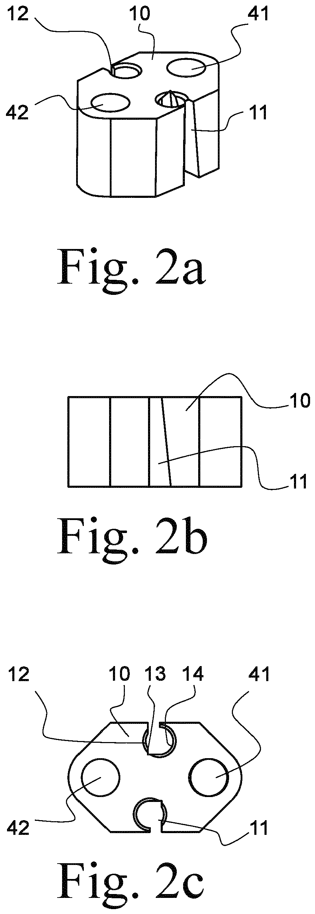

FIG. 2a - 2c illustrate schematically one exemplary embodiment of the clamp body 10. The first groove 11 on the clamp body 10 comprises a first portion 13 having a first wall with a partially circular cross-section for the first wire rope 31 and an adjacent second portion 14 having a tapered wall, where the distance to the first wall extends towards the second direction 2. The partially circular cross-section for the first wire rope 31 defines the concave first side wall for the first groove 11. The tapered wall defines the opposite side wall for the first groove 11.

The second groove 12 on the clamp body 10 comprises the first portion 13 having the first wall with the partially circular cross-section for the second wire rope 32 and the adjacent second portion 14 having the tapered wall, where the distance to the first wall extends towards the second direction 2. The first groove 11 and the second groove 12 are symmetrical in this embodiment. The partially circular cross-section for the second wire rope 32 defines the concave first side wall for the second groove 12. The tapered wall defines the opposite side wall for the second groove 12.

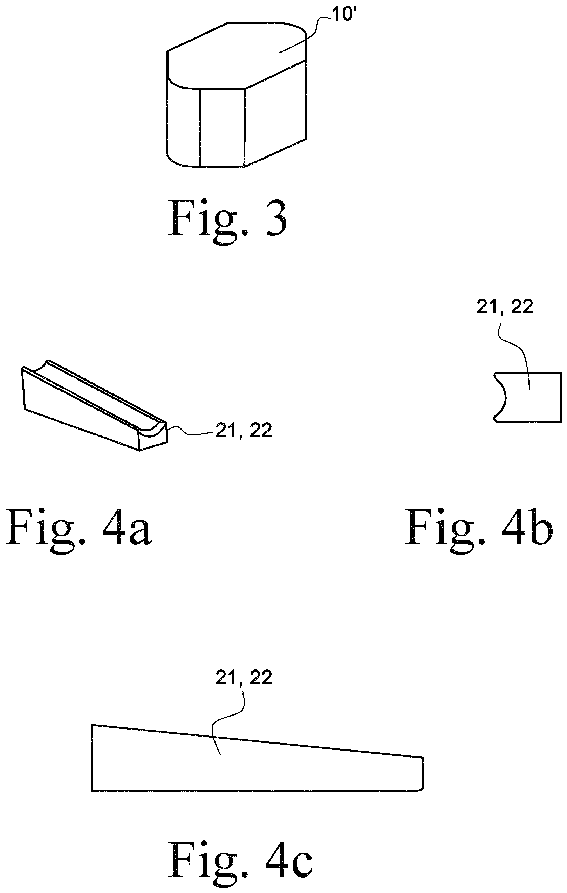

FIG. 4a illustrates schematically an isometric view of one exemplary embodiment of the wedge 21, 22. Both grooves 11, 12 are configured to receive wedges 21, 22 to fasten wire ropes 31, 32 to the clamp body 10 when the wedge clamp is in the tensioned state. The wire ropes 31, 32 are discussed in this disclosure when the wedge clamp is being used to tension the wire ropes 31, 32. The wire ropes 31, 32 do not form part of the wedge clamp. The first wedge 21 comprises a concave first edge 23 configured to engage with the first wire rope 31. The first wedge 21 clamps against the first wire rope 31 by the longitudinal concave first edge 23. The first wedge 21 comprises a second edge 24 configured to engage with the tapered wall of the first groove 11. The first wedge 21 is configured to slidably fit into the first groove 11 and while the wedge clamp is being tensioned, further tighten the first wire rope 31.

The second wedge 22 comprises the concave first edge 23 configured to engage with the second wire rope 32. The second wedge 22 clamps against the second wire rope 32 by the longitudinal concave first edge 23. The second wedge 22 comprises the second edge 24 configured to engage with the tapered wall of the second groove 12. The second wedge 22 is configured to slidably fit into the second groove 12 and while the wedge clamp is being tensioned, further tighten the second wire rope 32.

In one embodiment, the first wedge 21 comprises an elongated shape configured to receive a first clamp 51 on a portion of the first wedge 21 that is not compressed against the first groove 11. The first clamp 51 is configured to clamp a portion of the first wedge 21 and an end portion of the first wire rope 31 together, in the second direction 2 from the wedge clamp.

In one embodiment, the second wedge 22 comprises the elongated shape configured to receive a second clamp 52 on a portion of the second wedge 22 that is not compressed against the second groove 12. The second clamp 52 is configured to clamp a portion of the second wedge 22 and an end portion of the second wire rope 32 together, in the second direction 2 from the wedge clamp.

In one embodiment, the means for receiving the first clamp 51 or the second clamp 52 by the first wedge 21 or the second wedge 22 comprises a recess configured to receive portion of the clamp 51, 52. In one embodiment, the first clamp 51 and/or the second clamp 52 comprise a loop configured to surround the end portion of the wire rope 31, 32; and a bolt configured to tighten the wedge 21, 22 and the wire rope 31, 32 together. In one embodiment, the end portion of the first wedge 21 and/or the end portion of the second wedge 22 comprises an integrated clamp 51, 52 for the loose end portion of the wire rope 31, 32. In one embodiment, the integrated clamp 51, 52 comprises a channel for the wire rope 31, 32 that retains the wire rope 31, 32 in position during the tensioning process. In one embodiment, the integrated clamp 51, 52 comprises a channel for the wire rope 31, 32 that allows the wire rope 31, 32 to move only in the second direction 2. In one embodiment, the integrated clamp 51, 52 comprises a channel for the wire rope 31, 32 that provides a turn for the wire rope 31, 32 for providing friction to retain the wire rope 31, 32 in place.

The first clamp 51 and the second clamp 52 may reside in a recessed portion of the clamp body 10. In one embodiment, the first clamp 51 and the second clamp 52 are configured to be attached on the end portion of the first wedge 21 or the second wedge 52, extending beyond the surface of the clamp body 10. In one embodiment, the first wedge 21 extends over the clamp body 10 to the second direction 2 when the first wire rope 31 is in the tensioned state. In one embodiment, the second wedge 21 extends over the clamp body 10 to the second direction 2 when the second wire rope 32 is in tensioned state.

The clamps 51, 52 secure the wire ropes 31, 32 to wedges 21, 22 before the wedge clamp is in tensioned state. The clamps 51, 52 keep the wire ropes 31, 32 in position and avoid slipping of the wedge clamp during tensioning process. In one embodiment, the first wire rope 31 and the second wire rope 32 travel straight through the wedge clamp when the wedge clamp is in tensioned state. The clamps 51, 52 enable retaining the wire ropes 31, 32 straight during the assembly and the tensioning process. The portions of wire ropes 31, 32 extending to the second direction out of the wedge clamp may be free ends. In one embodiment the portions are connected, forming a free loop outside the tensioned portion of the wire ropes 31, 32.

In one embodiment, the tensioning device 40 comprises an insulating material 60 preventing a galvanic contact between the tensioning device and the clamp body 10; and thereby insulating the wire ropes 31, 32 from the ground anchor. The insulating material 60 is configured to extrude or deform at least partially out from between the tensioning device 40 and the clamp body 10 to indicate an overloaded tension in the wedge clamp. In the example of using the wedge clamp in anchoring the overhead electric line pole, the wire rope 31, 32 thickness may be between 15...20 mm. The exemplary deforming force for the insulating material is between 300...800 kN. The deformation enables quick visual inspection of whether the overhead lines have encountered excessive stress due to storms or other surprising phenomena that could lead to further inspection of the structure integrity.

In one embodiment the clamp body 10 is made of machined steel plate. In one embodiment the wedges 21, 22 are made of machined steel plate. Machining processes include milling, turning, drilling or threading. In one embodiment, the wedge clamp comprises hot-dip galvanized steel. The weight of the wedge clamp may be between 5 kg and 10 kg for the purpose of anchoring overhead line poles. The structure may be scaled differently for various purposes, wherein the weight changes accordingly.

FIG. 3 illustrates schematically an isometric view of one exemplary embodiment of a stock clamp body 10', before it is machined in its final form. A method for manufacturing the wedge clamp as described hereinbefore comprises the steps of drilling, for the first groove 11 of the clamp body 10', the first portion 13 having a partially circular cross-section for the first wire rope 31; and cutting, for the first groove 11 and adjacent to the first portion 13, the second portion 14 having the tapered wall extending towards the second direction 2. The second groove 12 may be machined in similar manner; by drilling the first portion 13 having the partially circular cross-section for the second wire rope 32; and cutting adjacent to the first portion 13, the second portion 14 having the tapered wall extending towards the second direction.

A single groove 11, 12 may be machined on the clamp body 10 by one drilling movement and one cutting movement. In one embodiment, the groove 11, 12 is machined by two cuts, wherein one cut is parallel to the drilling of the first portion 13 and the second portion is cut at an angle to define the tapered wall of the second portion 14. In one embodiment, the angle between the drilling of the first portion 13 and the tapered wall is between 4° and 7°. In one embodiment, the angle between the drilling of the first portion 13 and the tapered wall is between 5° and 6°. In one embodiment, the angle between the drilling of the first portion 13 and the second portion 14, the tapered wall is 5,7°. The angle is illustrated in the top view of the clamp body 10, FIG. 2b.

In one embodiment, the first wedge 21 and/or the second wedge 22 is machined. In one embodiment, the first wedge 21 and/or the second wedge 22 is machined from a single piece. In the first step the piece having the shape of two wedges is machined. The second step comprises drilling through the middle of the single piece to machine the concave first edge 23 to the first wedge 21 and to the second wedge 22. The third step comprises machining the opposite edges of the single piece to tapered second edges 24 of the first wedge 21 and of the second wedge 22. The fourth step comprises cutting the single piece along the drilling to separate the first wedge 21 and the second wedge 22.

FIG. 4b and FIG. 4c illustrate schematically two side views of the wedge 21, 22. The wedge 21, 22 angle is configured to match that of the second portion 14 of the groove 11, 12. In one embodiment, the angle of the wedge 21, 22 is between 5° and 6°. In one embodiment, the angle of the wedge 21, 22 is 5,7°. The angle is illustrated in the side view of the wedge 21, 22, FIG. 4c.

A wedge clamp for a wire rope is disclosed herein. The wedge clamp comprises a clamp body. The clamp body comprises a first groove configured to receive a first wire rope from a first direction; a second groove configured to receive a second wire rope from a first direction; and two tensioning openings configured to receive a tensioning device from a second direction opposite to the first direction. The tensioning device comprises a loop facing the second direction; two threaded bars facing the first direction, configured to extend through the tensioning openings; and two nuts configured to tighten on the threaded bars against the clamp body and to tension the wedge clamp. The first groove comprises a first portion having a partially circular cross-section for the first wire rope and an adjacent second portion having a tapered wall extending towards the second direction. The second groove comprises the first portion having the partially circular cross-section for the second wire rope and the adjacent second portion having the tapered wall extending towards the second direction. A first wedge comprises a concave first edge configured to engage with the first wire rope and a second edge configured to engage with the tapered wall, wherein the first wedge is configured to slidably fit into the first groove. A second wedge comprises the concave first edge configured to engage with the second wire rope and the second edge configured to engage with the tapered wall, wherein the second wedge is configured to slidably fit into the second groove. In one embodiment, the first wedge comprises an elongated shape; and a first clamp is configured to clamp a portion of the first wedge and an end portion of the first wire rope together, in the second direction from the wedge clamp. In one embodiment, the second wedge comprises an elongated shape; and a second clamp is configured to clamp a portion of the second wedge and an end portion of the second wire rope together, in the second direction from the wedge clamp. In one embodiment, the first wedge extends over the clamp body to the second direction when the first wire rope is in tensioned state. In one embodiment, the second wedge extends over the clamp body to the second direction when the second wire rope is in tensioned state. In one embodiment, the first wire rope and the second wire rope travel straight through the wedge clamp when the wedge clamp is in tensioned state. In one embodiment, the tensioning device comprises an insulating material preventing a galvanic contact to the clamp body; and the insulating material is configured to extrude or deform at least partially out from between the tensioning device and the clamp body to indicate an overloaded tension in the wedge clamp. In one embodiment, the clamp body is made of machined steel plate. In one embodiment, the wedge clamp comprises hot-dip galvanized steel.

Alternatively, or in addition. a method for manufacturing a wedge clamp for a wire rope is disclosed herein. In the method, the wedge clamp is the wedge clamp as disclosed hereinbefore. The method comprises the steps of: drilling, for the first groove, a first portion having a partially circular cross-section for a first wire rope; cutting, for the first groove and adjacent to the first portion, a second portion having a tapered wall extending towards the second direction; drilling, for the second groove, the first portion having the partially circular cross-section for a second wire rope; cutting, for the second groove and adjacent to the first portion, the second portion having the tapered wall extending towards the second direction. In one embodiment, the method comprises manufacturing a first wedge and a second wedge from a single piece; drilling through the middle of the single piece to machine a concave first edge to the first wedge and to the second edge; machining the opposite edges of the single piece to tapered second edges of the first wedge and of the second wedge; and cutting the single piece along the drilling to separate the first wedge and the second wedge. In one embodiment, the clamp body is made of steel plate. In one embodiment, the wedge clamp comprises hot-dip galvanized steel.

Any range or device value given herein may be extended or altered without losing the effect sought.

Although at least a portion of the subject matter has been described in language specific to structural features and/or acts, it is to be understood that the subject matter defined in the appended claims is not necessarily limited to the specific features or acts described above. Rather, the specific features and acts described above are disclosed as examples of implementing the claims and other equivalent features and acts are intended to be within the scope of the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that any reference to 'an' item refers to one or more of those items.

The steps of the methods described herein may be carried out in any suitable order, or simultaneously where appropriate. Additionally, individual blocks may be deleted from any of the methods without departing from the spirit and scope of the subject matter described herein. Aspects of any of the examples described above may be combined with aspects of any of the other examples described to form further examples without losing the effect sought.

The term 'comprising' is used herein to mean including the method blocks or elements identified, but that such blocks or elements do not comprise an exclusive list and a method or apparatus may contain additional blocks or elements.

It will be understood that the above description is given by way of example only and that various modifications may be made by those skilled in the art. The above specification, examples and data provide a complete description of the structure and use of exemplary embodiments. Although various embodiments have been described above with a certain degree of particularity, or with reference to one or more individual embodiments, those skilled in the art could make numerous alterations to the disclosed embodiments without departing from the spirit or scope of this specification.

## Claims

1. A wedge clamp for a wire rope, comprising:
a clamp body (10), comprising;
a first groove (11) configured to receive a first wire rope (31) from a first direction;
a second groove (12) configured to receive a second wire rope (32) from a first direction (1); and
two tensioning openings (42) configured to receive a tensioning device (40) from a second direction (2) opposite to the first direction (1);
wherein the tensioning device (40) comprises:
a loop (43) facing the second direction (2);
two threaded bars (44) facing the first direction (1), configured to extend through the tensioning openings (42); and
two nuts (41) configured to tighten on the threaded bars (44) against the clamp body (10) and to tension the wedge clamp;
**characterized in that**:
the first groove (11) comprises a first portion (13) having a partially circular cross-section for the first wire rope (31) and an adjacent second portion (14) having a tapered wall extending towards the second direction (2);
the second groove (12) comprises the first portion (13) having the partially circular cross-section for the second wire rope (32) and the adjacent second portion (14) having the tapered wall extending towards the second direction (2);
and by comprising:
a first wedge (21) having a concave first edge (23) configured to engage with the first wire rope (31) and a second edge (24) configured to engage with the tapered wall, wherein the first wedge (21) is configured to slidably fit into the first groove (11); and
a second wedge (22) having the concave first edge (23) configured to engage with the second wire rope (32) and the second edge (24) configured to engage with the tapered wall, wherein the second wedge (22) is configured to slidably fit into the second groove (12).

2. A wedge clamp according to claim 1, **characterized in that** the first wedge (21) comprises an elongated shape; and
a first clamp (51) is configured to clamp a portion of the first wedge (21) and an end portion of the first wire rope (31) together, in the second direction (2) from the wedge clamp.

3. A wedge clamp according to claim 1 or claim 2, **characterized in that** the second wedge (22) comprises an elongated shape; and
a second clamp (52) is configured to clamp a portion of the second wedge (22) and an end portion of the second wire rope (32) together, in the second direction (2) from the wedge clamp.

4. A wedge clamp according to any of the claims 1 to 3,
**characterized in that** the first wedge (21) extends over the clamp body (10) to the second direction (2) when the first wire rope (31) is in tensioned state.

5. A wedge clamp according to any of the claims 1 to 4,
**characterized in that** the second wedge (22) extends over the clamp body (10) to the second direction (2) when the second wire rope (32) is in tensioned state.

6. A wedge clamp according to any of the claims 1 to 5,
**characterized in that** the first wire rope (31) and the second wire rope (32) travel straight through the wedge clamp when the wedge clamp is in tensioned state.

7. A wedge clamp according to any of the claims 1 to 6,
**characterized in that** the tensioning device (40) comprises an insulating material (60) preventing a galvanic contact to the clamp body (10); and the insulating material (60) is configured to extrude or deform at least partially out from between the tensioning device (40) and the clamp body (10) to indicate an overloaded tension in the wedge clamp.

8. A wedge clamp according to any of the claims 1 to 7,
**characterized in that** the clamp body (10) is made of machined steel plate.

9. A wedge clamp according to any of the claims 1 to 8,
**characterized in that** the wedge clamp comprises hot-dip galvanized steel.

10. A wedge clamp according to any of the claims 1 to 8,
**characterized in that** the angle between the first portion (13) and the tapered wall of the second portion (14) is between 4° and 7°.

11. A method for manufacturing a wedge clamp for a wire rope, where the wedge clamp comprises:
a clamp body (10), comprising:
a first groove (11) configured to receive a first wire rope (31) from a first direction (1),
a second groove (12) configured to receive a second wire rope (32) from a first direction (1); and
two tensioning openings (42) configured to receive a tensioning device (40) from a second direction (2) opposite to the first direction (1);
the tensioning device (40) comprises:
a loop (43) facing the second direction (2);
two threaded bars (44) facing the first direction (1), configured to extend through the tensioning openings (42); and
two nuts (41) configured to tighten on the threaded bars (44) against the clamp body (10) and to tension the wedge clamp;
**characterized in that** the method comprises the steps of:
drilling, for the first groove (11), a first portion (13) having a partially circular cross-section for a first wire rope (31);
cutting, for the first groove (11) and adjacent to the first portion (13), a second portion (14) having a tapered wall extending towards the second direction (2);
drilling, for the second groove (12), the first portion (13) having the partially circular cross-section for a second wire rope (32);
cutting, for the second groove (12) and adjacent to the first portion (13),
the second portion (14) having the tapered wall extending towards the second direction (2).

12. A method according to claim 111, **characterized by** manufacturing a first wedge (21) and a second wedge (22) from a single piece;
drilling through the middle of the single piece to machine a concave first edge (23) to the first wedge (21) and to the second edge (24);
machining the opposite edges of the single piece to tapered second edges (24) of the first wedge (21) and of the second wedge (22); and cutting the single piece along the drilling to separate the first wedge (21) and the second wedge (22).

13. A method according to claims 11 or claim 12, **characterized in that** the clamp body (10) is made of steel plate.

14. A method according to any of the claims 11 to 13, **characterized in that** the wedge clamp comprises hot-dip galvanized steel.

15. A method according to any of the claims 11 to 14, **characterized by** comprising the wedge clamp according to any of the claims 1 to 8.
